# EUROPÄISCHE PATENTSCHRIFT

(11) **EP 2 817 121 B1**
(45) Veröffentlichungstag und Bekanntmachung des Hinweises auf die Patenterteilung: **20.01.2016**
(21) Anmeldenummer: 13805223.8
(22) Anmeldetag: 11.11.2013
(51) Int. Cl.: G01N 25/18, B23K 9/095, B23K 9/16, B23K 9/32, G01N 25/20

(54) **VERFAHREN UND VORRICHTUNG ZUM ÜBERWACHEN DES SCHUTZGASES BEI EINEM SCHWEIßPROZESS**
METHOD AND DEVICE FOR MONITORING OF PROTECTIVE GAS IN A WELDING PROCESS
PROCÉDÉ ET DISPOSITIF POUR MONITORISER LE GAZ PROTECTEUR DANS UNE OPÉRATION DE SOUDAGE

(30) Priorität: 28.11.2012 AT 505472012
(43) Veröffentlichungstag der Anmeldung: 31.12.2014
(73) Patentinhaber: Fronius International GmbH, 4643 Pettenbach (AT)
(72) Erfinder: ZIMMER, Johannes, A-4600 Wels (AT); SCHARINGER, David, A-4840 Vöcklabruck (AT); GRADAUER, Manuel, A-4565 Inzersdorf (AT); PFLÜGELMEIER, Helmut, A-4070 Eferding (AT)
(74) Vertreter: Sonn & Partner Patentanwälte
(86) Internationale Anmeldenummer: PCT/AT2013/050215
(87) Internationale Veröffentlichungsnummer: WO 2014/082109

(56) Entgegenhaltungen:
- WO-A1-2008/101264
- WO-A1-2009/031902
- US-A1- 2011 163 072

## Beschreibung

Die Erfindung betrifft ein Verfahren zum Überwachen des Schutzgases bei einem mit einem Schweißbrenner durchgeführten Schweißprozess, wobei zumindest eine von der Art des Schutzgases abhängige Messgröße mit zumindest einem Sensor gemessen wird.

Weiters betrifft die Erfindung eine Vorrichtung zum Überwachen des Schutzgases bei einem mit einem Schweißbrenner durchgeführten Schweißprozess, wobei zumindest ein Sensor zur Messung zumindest einer von der Art des Schutzgases abhängigen Messgröße vorgesehen ist.

Obgleich die gegenständliche Anmeldung auf die Überwachung des Schutzgases bei einem Schweißprozess gerichtet ist, fallen unter den Begriff Schutzgas auch andere, bei Schweißprozessen verwendete Gase, wie Formiergase, Prozessgase und Transportgase.

Aus dem Stand der Technik sind bereits Verfahren und Vorrichtungen bekannt, welche das bei einem Schweißprozess eingesetzte Schutzgas erfassen. Beispielsweise beschreibt die AT 504964 B1 eine Vorrichtung und ein Verfahren zur Schutzgasmessung, wobei die Schutzwirkung des Schutzgases durch Erfassung des Sauerstoffanteils des Schutzgases gemessen wird.

Die WO 2009/031902 A1 zeigt die Regelung des Flusses des Schutzgases in Abhängigkeit des Schweißstroms zur Erzielung einer möglichst konstanten Gasströmung.

Die US 2011/163072 A1 beschreibt ein Schweißsystem und ein Verfahren zum Steuern eines Schweißgeräts, wobei unter Zuhilfenahme von statistischen Analysen bestimmte Schweißparameter, darunter auch die optimale Art des Schutzgases, aus bestimmten eingestellten Schweißparametern, wie z.B. Schweißstrom und Schweißspannung, bestimmt werden. Die Art eines bei einem Schweißprozess verwendeten Schutzgases kann nicht bestimmt werden.

Da die Erfassung der Art des Schutzgases bzw. dessen Zusammensetzung beispielsweise mit einem Chromatographen relativ aufwendig ist, wird diese bei Schweißvorrichtungen bislang nicht vorgenommen.

Die Aufgabe der vorliegenden Erfindung besteht daher in der Schaffung eines oben genannten Verfahrens und einer oben genannten Vorrichtung zum Überwachen des Schutzgases, mit welchem auf die Art des Schutzgases rückgeschlossen werden kann. Das Verfahren und die Vorrichtung sollen möglichst einfach und kostengünstig realisierbar sein.

Gelöst wird die erfindungsgemäße Aufgabe in verfahrensmäßiger Hinsicht dadurch, dass zumindest zwei Messgrößen des Schutzgases gemessen werden und die Messwerte der zumindest zwei Messgrößen des Schutzgases mit mehreren Schutzgasarten zugeordneten gespeicherten Werten der zumindest zwei Messgrößen verglichen werden und jene Schutzgasart angezeigt wird, dessen zugeordnete Werte der zumindest zwei Messgrößen den Messwerten der zumindest zwei Messgrößen des Schutzgases am nächsten liegen. Erfindungsgemäß werden also zumindest zwei Messgrößen des Schutzgases gemessen und dem Schutzgas als Art Fingerprint zugeordnet. Der gemessene Fingerprint des Schutzgases wird sodann mit gespeicherten Fingerprints bekannter Schutzgase verglichen und jene Schutzgasart an der Anzeige der Schweißvorrichtung angezeigt, dessen Fingerprint dem Fingerprint des gemessenen Schutzgases am ehesten entspricht. Bei zwei Messgrößen wird also ein Wertepaar gebildet und mit gespeicherten Wertepaaren verglichen. Bei Auswahl leicht messbarer Messgrößen des Schutzgases kann das Verfahren relativ kostengunstig und einfach implementiert werden, sodass eine Anwendung auch bei einem Schweißverfahren bzw. innerhalb einer Schweißvorrichtung möglich ist. Als Messgrößen des Schutzgases kommen beispielsweise die Heizleistung, die Temperatur, die Viskosität, die Dichte, der kritische Durchfluss (das ist jener Durchfluss, bei dem ein Wechsel von laminarer in turbulente Strömung stattfindet), usw. in Frage. Die zumindest zwei Messgrößen des Schutzgases werden unter kontrollierten Bedingungen für die in der Schweißtechnik eingesetzten Schutzgase gemessen und die Werte der jeweiligen Schutzgasart zugeordnet. Somit wird eine Art Tabelle, Kennlinie oder Karte der wirklichen Schutzgasarten mit den jeweiligen zugeordneten Werten der Messgrößen angelegt und gespeichert und als Vorschrift in der Schweißvorrichtung hinterlegt. Die gemessenen Werte für die zumindest zwei Messgrößen des Schutzgases werden dann entsprechend der Vorschrift verglichen und die am ehesten in Frage kommende Schutzgasart ausgewählt und an der Schweißvorrichtung angezeigt. Somit kann der Schweißer an der Anzeige der Schweißvorrichtung überprüfen, welches Schutzgas beim Schweißprozess verwendet wird. In der Folge können dem Schweißer beispielsweise nur jene Konfigurationsmöglichkeiten freigeschaltet werden, welche mit dem ausgewählten Schutzgas möglich sind. Das Schweißgerät führt dabei die Freischaltungen automatisch durch, sodass dem Schweißer die Konfiguration erleichtert wird.

Vorzugsweise werden als Messgrößen des Schutzgases die Heizleistung und der Differenzdruck des Schutzgases als Messgröße gemessen, welche als Maß für Massenstrom und Volumenstrom dienen, und die Messwerte der Heizleistung und des Differenzdrucks mit mehreren Schutzgasarten zugeordneten gespeicherten Werten der Heizleistung und des Differenzdrucks verglichen werden, und jene Schutzgasart angezeigt wird, dessen zugeordnete Werte der Heizleistung und des Differenzdrucks den Messwerten der Heizleistung und des Differenzdrucks am nächsten liegen.

Die Heizleistung bzw. der Massenstrom des Schutzgases kann besonders einfach und kostengünstig mit einem kalorimetrischen Massenstrommessverfahren gemessen werden. Bei diesem thermischen Durchflussmesser wird beispielsweise ein Heizelement in der Führung des Schutzgases erwärmt und mit zumindest einem Temperatursensor der Wärmetransport des Schutzgases erfasst. Dazu kann der Sensor auch im Heizelement integriert sein. Ein derartiges kalorimetrisches Massenstrommessverfahren kann in Dünnschichttechnik besonders einfach und platzsparend realisiert werden. In äquivalenter Weise kann auch die Temperatur konstant gehalten werden und entsprechend der Strom und/oder die Heizleistung gemessen werden, welche erforderlich ist, um die Temperatur konstant zu halten.

Der Differenzdruck bzw. der Volumenstrom des Schutzgases kann in geeigneter Weise an einer Messblende mit aus dem Stand der Technik bekannten Sensoren gemessen werden. Dabei wird der Volumenstrom über den Differenzdruck als Differenz des Druckes des Schutzgases an zwei Stellen gemessen. Auch dieses Messverfahren kann relativ einfach und mit geringer Baugröße realisiert werden.

Wenn beim Vergleich der Messwerte der zumindest zwei Messgrößen des Schutzgases mit den mehreren Schutzgasarten zugeordneten gespeicherten Werten der zumindest zwei Messgrößen kein eindeutiges Ergebnis liefern und die zugeordneten gespeicherten Werte von den Messwerten gleich weit entfernt sind, werden vorzugsweise die zwei Schutzgasarten angezeigt. Der Schweißer kann dann an der Anzeige jene Schutzgasart, welche der Realität entspricht, auswählen oder gegebenenfalls eine Wiederholung der Schutzgasmessung vornehmen.

Eine genauere Erfassung der Schutzgasart kann bei zusätzlicher Berücksichtigung der Temperatur des Schutzgases als weitere Messgröße des Schutzgases erfolgen. Da viele Messgrößen des Schutzgases, insbesondere auch die Heizleistung und der Differenzdruck als Maß für den Massenstrom und Volumenstrom, von der Temperatur abhängen, kann bei Erfassung der Temperatur des Schutzgases darauf entsprechend Rücksicht genommen werden und eine genauere Messung der Art des Schutzgases vorgenommen werden.

Gemäß einem weiteren Merkmal der Erfindung ist vorgesehen, dass eine Warnung ausgegeben wird, wenn die Differenzen der Messwerte der zumindest zwei Messgrößen des Schutzgases von den mehreren Schutzgasarten zugeordneten gespeicherten Werten der zumindest zwei Messgrößen vorgegebene Grenzwerte überschreiten. Wenn also die Messwerte zu weit von den gespeicherten Werten entfernt sind und das Ergebnis des Vergleichs zu ungenau wäre, wird eine akustische oder optische Warnung an den Schweißer oder direkt an den Schweißroboter vorgenommen und eine Wiederholung der Messung gefordert.

Wenn der Durchfluss und/oder ein Rückstaudruck des Schutzgases gemessen wird und die Unterschreitung eines vorgegebenen Grenzwerts des Durchflusses und/oder des Rückstaudrucks des Schutzgases erfasst wird, kann eine Warnung einer möglichen Verschmutzung des Schweißbrenners ausgegeben werden. Die Messung des Schutzgases kann prinzipiell an einer beliebigen Stelle direkt oder auch indirekt über den Druck des Schutzgases vorgenommen werden. Die Genauigkeit der Messung wird dann höher sein, wenn die Messung im Wesentlichen im Schweißbrenner durchgeführt wird, da die Messung in unmittelbarer Nähe der Verschmutzung erfolgt. Möglich ist jedoch auch eine Messung im Schweißgerät an einer geeigneten Stelle der Leitung vom Gasspeicher zum Schweißbrenner, wobei der Rückstaudruck erfasst und ausgewertet wird. Von Vorteil ist dabei auch, wenn die Messungen kontinuierlich während des Schweißens durchgeführt werden, sodass ein Druckhistogramm erstellt und daraus auf die Verschmutzung rückgeschlossen werden kann.

Vorteilhafterweise wird der Schweißbrenner automatisch gereinigt, wenn der vorgegebene Grenzwert des Durchflusses und/oder des Rückstaudrucks des Schutzgases unterschritten wird. Beispielsweise kann mit dem Roboter eine Reinigungsvorrichtung angefahren werden und der Schweißbrenner, insbesondere dessen Gasdüse, mechanisch oder magnetisch von Verunreinigungen befreit werden.

Die erfindungsgemäße Aufgabe wird auch durch eine oben genannte Vorrichtung zum Überwachen des Schutzgases bei einem mit einem Schweißbrenner durchgeführten Schweißprozess gelöst, wobei zumindest ein Sensor zur Messung zumindest zweier Messgrößen des Schutzgases, weiters ein Speicher zum Speichern mehrerer Schutzgasarten und diesen Schutzgasarten zugeordneten Werten zumindest zweier Messgrößen, eine Einrichtung zum Vergleichen der Messwerte des Schutzgases mit den mehreren Schutzgasarten zugeordneten gespeicherten Werten, und eine Anzeige zur Anzeige jener Schutzgasart, dessen zugeordnete Werte den Messwerten am nächsten liegen, vorgesehen ist. Eine derartige Vorrichtung ist relativ einfach implementierbar, insbesondere deswegen, da ohnedies vorhandene Einrichtungen in Schweißvorrichtungen, wie z.B. Steuervorrichtungen, dazu herangezogen werden können. Zu den weiteren Vorteilen der Überwachungsvorrichtung wird auf die obige Beschreibung des Verfahrens verwiesen. Zur Messung der zumindest zwei Messgrößen kann ein Sensor, der in der Lage ist beide Messgrößen zu messen, oder es können auch zwei Sensoren zur Messung jeweils einer Messgröße des Schutzgases herangezogen werden. Wie bereits oben erwähnt eignet sich die Messung der Heizleistung und des Differenzdrucks des Schutzgases als Messgrößen besonders.

Dabei wird der Sensor zur Messung der Heizleistung bzw. des Massenstroms des Schutzgases vorzugsweise durch einen kalorimetrischen Massendurchflusssensor, der in Dünnschichttechnik realisiert werden kann, gebildet.

Der Sensor zur Messung des Differenzdrucks bzw. des Volumenstroms des Schutzgases wird vorzugsweise durch zumindest einen Differenzdrucksensor gebildet.

Die Anzeige der Schweißvorrichtung ist zur Anzeige zweier Schutzgasarten ausgebildet, dessen zugeordneten gespeicherten Werte der zumindest zwei Messgrößen des Schutzgases gleich weit von den Messwerten der zumindest zwei Messgrößen des Schutzgases beabstandet sind. Sollte also der gemessene Fingerprint des Schutzgases genau in der Mitte zweier gespeicherter Fingerprints liegen, werden beide Schutzgasarten an der Anzeige der Schweißvorrichtung angezeigt und der Schweißer kann eine Auswahl vornehmen oder die Messung wiederholen.

Wenn ein Sensor zur Messung der Temperatur des Schutzgases als weitere Messgröße des Schutzgases vorgesehen ist, kann eine genauere Erfassung der Schutzgasart erfolgen. Die Temperatur des Schutzgases kann mit miniaturisierbaren Sensoren relativ einfach erfasst werden.

Gemäß einem weiteren Merkmal der Erfindung ist eine Warnvorrichtung zur Ausgabe einer optischen und/oder akustischen Warnung vorgesehen, wenn die Differenzen zwischen den Messwerten der zumindest zwei Messgrößen des Schutzgases und den zugeordneten gespeicherten Werten der zumindest zwei Messgrößen des Schutzgases vorgegebene Grenzwerte überschreiten. In diesem Fall werden bei zu großer Abweichung der Messwerte von den gespeicherten Werten bzw. der gemessenen Fingerprints des Schutzgases von den gespeicherten Fingerprints entsprechende Warnungen ausgegeben, welche den Schweißer oder den Schweißroboter zu einer Wiederholung der Schutzgasmessung anregen sollen.

Der zumindest eine Sensor zur Messung der zumindest zwei Messgrößen des Schutzgases ist vorzugsweise in einer mit dem Schweißbrenner verbundenen Stromquelle angeordnet.

Wenn zusätzlich ein Sensor zur Messung des Durchflusses und/oder des Rückstaudrucks des Schutzgases vorgesehen ist, kann bei Unterschreitung des gemessenen Durchflusses und/oder Rückstaudrucks unter einen vorgegebenen Grenzwert auf eine Verschmutzung des Schweißbrenners rückgeschlossen und eine entsprechende Warnung an den Schweißer oder Schweißroboter ausgegeben werden.

Dabei ist es von Vorteil, wenn eine Reinigungsvorrichtung zur automatischen Reinigung des Schweißbrenners bei Unterschreitung des zumindest einen gemessenen Durchflusses und/oder Rückstaudrucks des Schutzgases vorgesehen ist. Die Reinigungsvorrichtung kann eine mechanische und/oder magnetische Reinigung der Komponenten des Schweißbrenners, insbesondere dessen Gasdüse, vornehmen.

Die vorliegende Erfindung wird anhand der beigefügten, schematischen Zeichnungen näher erläutert. Darin zeigen:
Fig. 1 eine schematische Darstellung einer Schweißvorrichtung;
Fig. 2 ein Blockschaltbild eines Verfahrens zur Überwachung des Schutzgases bei einem Schweißprozess;
Fig. 3 ein Beispiel für eine Kennlinie mit mehreren Schutzgasarten zugeordneten gespeicherten Werten zweier Messgrößen des Schutzgases; und
Fig. 4 ein Blockschaltbild zur Veranschaulichung der Erfassung des Durchflusses des Schutzgases als Indikator für eine mögliche Verschmutzung des Schweißbrenners.

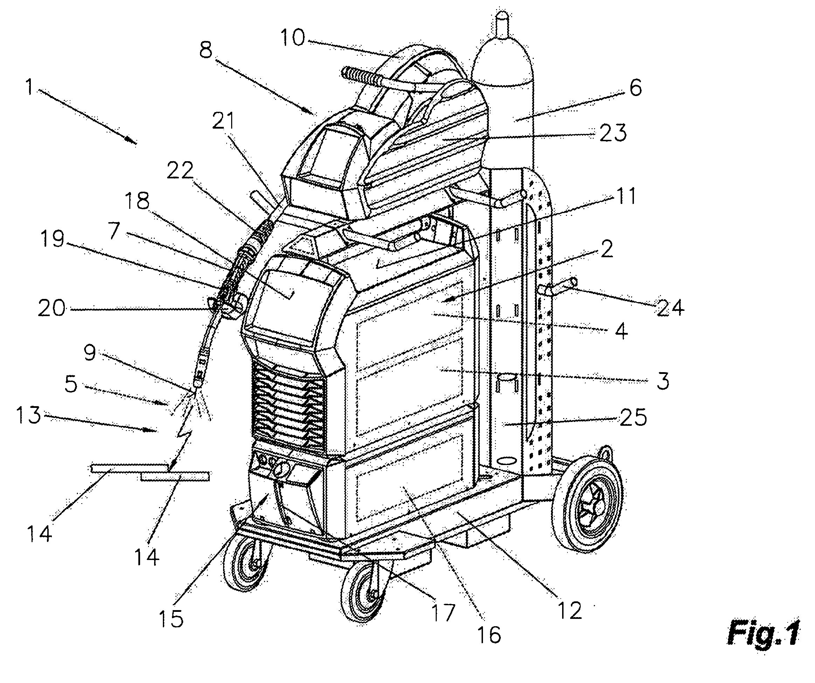

In Fig. 1 ist eine Schweißvorrichtung 1 für verschiedenste Prozesse bzw. Verfahren, wie z.B. MIG/MAG-, WIG/TIG-, Elektroden-, Doppeldraht/Tandem-Schweißverfahren, Plasma- oder Lötverfahren usw., gezeigt.

Die Schweißvorrichtung 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventile, usw. Die Steuervorrichtung 4 ist beispielsweise mit einem Steuerventil verbunden, welches in einer Versorgungsleitung für ein Schutzgas 5 zwischen einem Gasspeicher 6 und einem Schweißbrenner 7 angeordnet ist.

Zudem kann über die Steuervorrichtung 4 noch eine Vorrichtung 8 zur Förderung eines Schweißdrahts 9 von einer Vorratstrommel 10 bzw. einer Drahtrolle in dem Bereich des Schweißbrenners 7 angesteuert werden, wie es beispielsweise für das MIG/MAG-Schweißen üblich ist. Selbstverständlich kann die Fördervorrichtung 8 auch in der Schweißvorrichtung 1, insbesondere im Gehäuse 11 der Stromquelle 2, integriert und nicht, wie in Fig. 1 dargestellt, als Zusatzgerät auf einem Fahrwagen 12 positioniert sein. Die Fördervorrichtung 8 für den Schweißdraht 9 kann auch direkt auf der Schweißvorrichtung 1 aufgesetzt werden, wobei das Gehäuse 11 der Stromquelle 2 an der Oberseite zur Aufnahme der Fördervorrichtung 8 ausgebildet ist, und der Fahrwagen 12 entfallen kann.

Der Schweißdraht 9 kann von einer Fördervorrichtung 8 auch außerhalb des Schweißbrenners 7 an die Prozessstelle zugeführt werden, wobei im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13 zwischen dem Schweißdraht 9 und einem aus einem oder mehreren Teilen gebildeten Werkstück 14 wird über eine Schweißleitung (nicht dargestellt) vom Leistungsteil 3 der Stromquelle 2 dem Schweißbrenner 7 zugeführt. Das Werkstück 14 wird über eine weitere Schweißleitung (nicht dargestellt) für das weitere Potential, insbesondere ein Masse-Kabel, mit der Stromquelle 2 verbunden, wodurch über den Lichtbogen 13 ein Stromkreis für einen Prozess aufgebaut werden kann.

Zum Kühlen des Schweißbrenners 7 wird dieser über ein Kühlgerät 15 unter Zwischenschaltung allfälliger Komponenten, wie beispielsweise einem Strömungswächter, mit einem Flüssigkeitsbehälter, insbesondere einem Wasserbehälter 16 mit einer Füllstandsanzeige 17, verbunden. Bei Inbetriebnahme des Schweißbrenners 7 wird das Kühlgerät 15, insbesondere eine für die im Wasserbehälter 16 angeordnete Flüssigkeit verwendete Flüssigkeitspumpe, gestartet, wodurch eine Kühlung des Schweißbrenners 7 bewirkt wird. Wie bei dem dargestellten Ausführungsbeispiel gezeigt, wird das Kühlgerät 15 auf dem Fahrwagen 12 positioniert, auf das anschließend die Stromquelle 2 gestellt wird. Die einzelnen Komponenten der Schweißvorrichtung 1, also die Stromquelle 2, die Fördervorrichtung 8 und das Kühlgerät 15, sind dabei derart ausgebildet, dass diese entsprechende Vorsprünge bzw. Ausnehmungen aufweisen, sodass sie sicher aufeinander gestapelt bzw. aufeinander gestellt werden können.

Die Schweißvorrichtung 1, insbesondere die Stromquelle 2, weist weiters eine Ein- und/oder Ausgabevorrichtung 18 auf, über welche die unterschiedlichsten Schweißparameter, Betriebsarten oder Schweißprogramme des Schweißgerätes 1 eingestellt bzw. aufgerufen und angezeigt werden können. Die über die Ein- und/oder Ausgabevorrichtung 18 eingestellten Schweißparameter, Betriebsarten oder Schweißprogramme werden an die Steuervorrichtung 4 weitergeleitet und von dieser anschließend die einzelnen Komponenten der Schweißvorrichtung 1 angesteuert bzw. entsprechende Sollwerte für die Regelung oder Steuerung vorgegeben. Bei Verwendung eines entsprechenden Schweißbrenners 7 können auch Einstellvorgänge über den Schweißbrenner 7 vorgenommen werden, wozu der Schweißbrenner 7 mit einer Schweißbrenner-Ein- und/oder Ausgabevorrichtung 19 ausgestattet ist. Bevorzugt ist dabei der Schweißbrenner 7 über einen Datenbus, insbesondere einen seriellen Datenbus, mit der Schweißvorrichtung 1, insbesondere der Stromquelle 2 oder der Fördervorrichtung 8, verbunden. Zum Starten des Schweißprozesses weist der Schweißbrenner 7 meist einen Startschalter (nicht dargestellt) auf, durch dessen Betätigung der Lichtbogen 13 gezündet werden kann. Um gegen die vom Lichtbogen 13 ausgehende Hitzestrahlung geschützt zu werden, kann der Schweißbrenner 7 mit einem Hitzeschutzschild 20 ausgestattet werden.

Beim dargestellten Ausführungsbeispiel ist der Schweißbrenner 7 über ein Schlauchpaket 21 mit der Schweißvorrichtung 1 verbunden, wobei das Schlauchpaket 21 über einen Knickschutz 22 am Schweißbrenner 7 befestigt sein kann. Im Schlauchpaket 21 sind die einzelnen Leitungen, wie beispielsweise die Versorgungsleitung, Leitungen für den Schweißdraht 9, das Schutzgas 5, den Kühlkreislauf, die Datenübertragung, usw., von der Schweißvorrichtung 1 zum Schweißbrenner 7 angeordnet, wogegen das Masse-Kabel bevorzugt gesondert an der Stromquelle 2 angeschlossen wird. Das Schlauchpaket 21 wird vorzugsweise über eine nicht dargestellte Kupplungsvorrichtung an der Stromquelle 2 oder der Fördervorrichtung 8 angeschlossen, wogegen die einzelnen Leitungen im Schlauchpaket 21 mit einem Knickschutz am bzw. im Schweißbrenner 7 befestigt sind. Damit eine entsprechende Zugentlastung des Schlauchpakets 21 gewährleistet ist, kann das Schlauchpaket 21 über eine Zugentlastungsvorrichtung mit dem Gehäuse 11 der Stromquelle 2 oder der Fördervorrichtung 8 verbunden sein (nicht dargestellt).

Grundsätzlich müssen für die unterschiedlichen Schweißverfahren bzw. Schweißvorrichtungen 1 nicht alle zuvor benannten Komponenten verwendet bzw. eingesetzt werden. Der Schweißbrenner 7 kann auch als luftgekühlter Schweißbrenner 7 ausgeführt werden und das Kühlgerät 15 entfallen. Die Schweißvorrichtung 1 wird zumindest durch die Stromquelle 2, die Fördervorrichtung 8 und allenfalls das Kühlgerät 15 gebildet, wobei diese Komponenten auch in einem gemeinsamen Gehäuse 11 angeordnet sein können. Es können noch weitere Teile bzw. Komponenten, wie beispielsweise ein Schleifschutz 23 an der Fördervorrichtung 8 oder ein Optionsträger 24 an einer Haltevorrichtung 25 für den Gasspeicher 6 usw., angeordnet werden.

Die in Fig. 1 dargestellte Ausführungsform einer Schweißvorrichtung 1 stellt nur eine von vielen Möglichkeiten dar. Insbesondere können die Schweißvorrichtungen 1 hinsichtlich der Zuführung des Schweißdrahts 9, der Länge des Schlauchpakets 21, der Art, Position und Anzahl von Fördervorrichtungen 8 für den Schweißdraht 9, dem Vorhandensein eines Drahtpuffers (nicht dargestellt) und vielem mehr variieren.

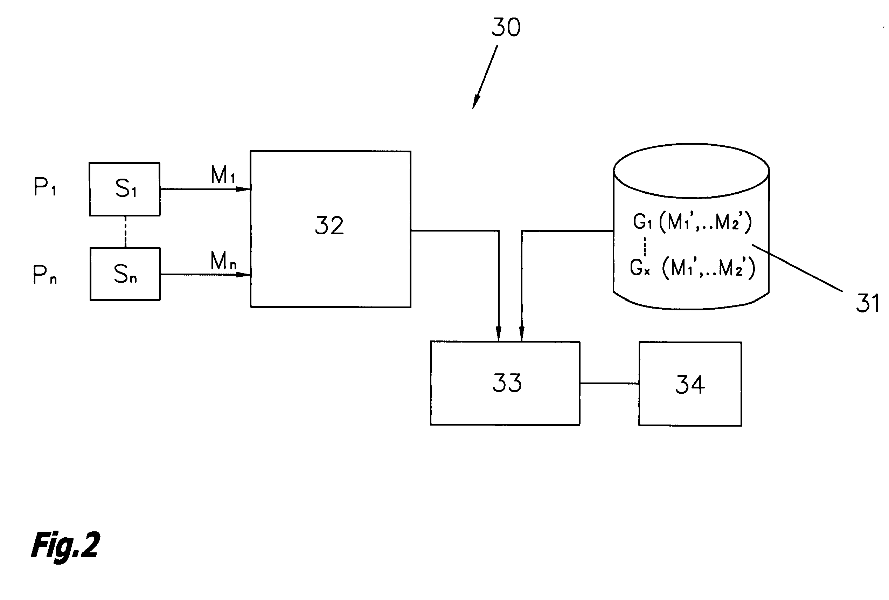

Fig. 2 zeigt ein Blockschaltbild zur Veranschaulichung eines Verfahrens zum Überwachen des Schutzgases bei einem mit einem Schweißbrenner durchgeführten Schweißprozess, wobei zumindest zwei Messgrößen Pi des Schutzgases mit zumindest einem Sensor Si gemessen werden. Dabei kann jeweils ein Sensor Si zur Messung jeweils einer Messgröße Pi des Schutzgases oder auch ein Sensor Si zur Messung mehrerer Messgrößen Pi des Schutzgases eingesetzt werden. Die Vorrichtung 30 zum Überwachen des Schutzgases umfasst weiters einen Speicher 31, in dem jeder Schutzgasart Gi zumindest zwei Messgrößen Pi als gespeicherte Werte Mi' zugeordnet und abgelegt sind. Nach einer allfälligen Vorverarbeitung der durch die Sensoren Si gemessenen Messwerte Mi in einer entsprechenden Einrichtung 32 erfolgt in einer Vergleichseinrichtung 33 ein Vergleich der Messwerte Mi mit den gespeicherten Werten Mi'. Dabei sind die Messwerte Mi entsprechend die gemessenen Werte der Messgröße Pi. Auf einer Anzeige 34 wird dann die zumindest eine Schutzgasart Gi angezeigt, dessen zugeordnete Werte Mi' den Messwerten Mi des Schutzgases am nächsten kommen. Die erkannte Schutzgasart hat auch Auswirkungen auf die Parametrierung bzw. Konfiguration des Schweißgeräts, indem beispielsweise nur Kennlinien ausgewählt werden können, die mit der erkannten Schutzgasart möglich sind. Dies gilt ebenso für Einzelparameter, wie das Material des Werkstücks oder die Stromstärke. Es werden also die Konfigurationsmöglichkeiten eingeschränkt bzw. vorgegeben. Als Messgröße Pi des Schutzgases wird vorzugsweise die Heizleistung und der Differenzdruck des Schutzgases als Maß für den Massenstrom und den Volumenstrom gemessen. Die Messung ist dabei von Einflussgrößen wie Temperatur T, Viskosität, Dichte p, Wärmeleitfähigkeit, usw. abhängig, wobei die Einflussgrößen entsprechend vom Schutzgas abhängig sind. Somit ergeben sich entsprechend unterschiedliche Messwerte Mi der Messgrößen Pi der Schutzgase.

Nachdem das Schutzgas vor einem Schweißvorgang zugeordnet wurde, wird der Sensor auf das Schutzgas eingestellt und kann somit den Massenstrom und/oder Volumenstrom während eines Schweißvorgangs messen. Daher wird bevorzugt als Sensor ein Massenstromsensor eingesetzt.

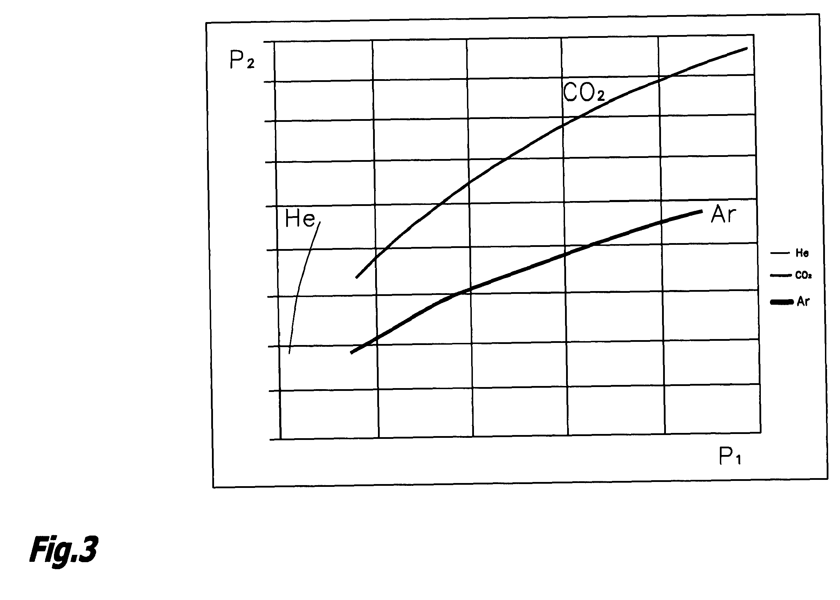

Fig. 3 zeigt ein Beispiel gespeicherter Messwerte, wobei die Heizleistung und der Differenzdruck eines Schutzgases als die zwei Messgrößen P1 und P2 aufgetragen sind. Die Heizleistung wird mit einem kalorimetrischen Massenstromsensor erfasst. Der Differenzdruck wird dabei an einer Messblende, also einer Engstelle, gemessen. Unter Laborbedingungen bzw. nach einer Kalibrierung werden für die beim Schweißverfahren verwendeten Schutzgase die Werte für die Messgrößen P1 und P2 erfasst und dadurch die entsprechende Schutzgasart durch eine Kennlinie definiert. Die gemessenen Werte für die Messgrößen P1 und P2 des Schutzgases werden dann mit den gespeicherten Werten verglichen und jenes Schutzgas ausgewählt und angezeigt, das den Messwerten am nächsten liegt. Die Heizleistung kann in äquivalenter Weise auch durch die Messgröße Temperaturerhöhung oder Ähnliches ersetzt werden. Zum Speichern der Werte wird dabei das Heizelement beispielsweise mit konstanter Temperatur betrieben. Die Leistung, die erforderlich ist, um beim durchströmenden Schutzgas die Temperatur konstant zu halten, ist entsprechend proportional zum Wärmetransport. Äquivalent kann dies auch mit dem Strom für das Heizelement indirekt gemessen werden.

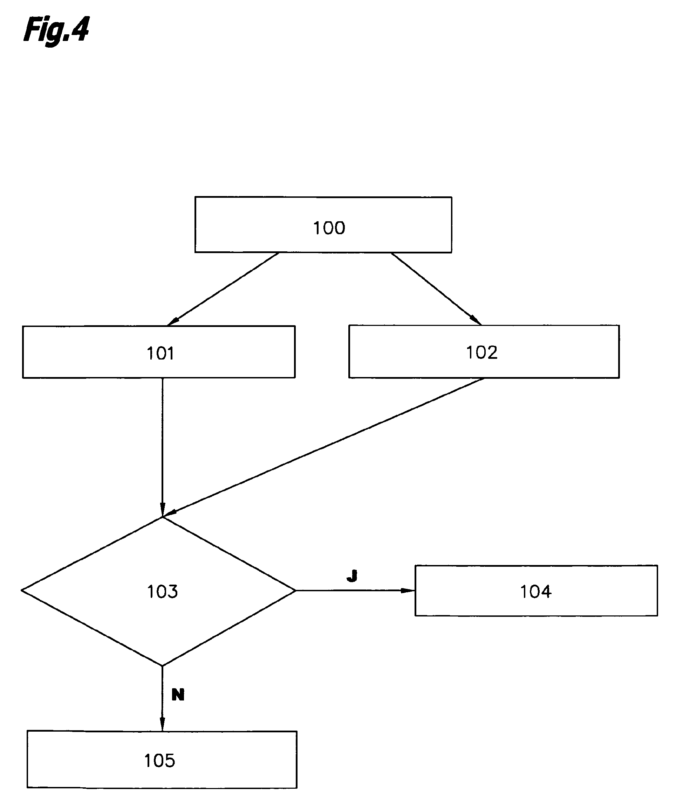

Fig. 4 zeigt schließlich ein Flussdiagramm eines Verfahrens gemäß dem über die Messung des Durchflusses und/oder des Rückstaudrucks des Schutzgases auf eine Verschmutzung des Schweißbrenners 7 bzw. dessen Gasdüse rückgeschlossen werden kann. Nach einer Referenzierung der Normalbedingung gemäß Block 100 und einem Test für die Druck- und/oder Durchflussmessung (Block 102) erfolgt gemäß Block 101 eine Überwachung und Aufzeichnung der Werte des Druckverlaufs und/oder Durchflussverlaufs des Schutzgases während des Schweißprozesses. Gemäß Abfrage 103 erfolgt ein Vergleich der gemessenen Werte mit einem vorgegebenen Grenzwert. Ist der gemessene Wert höher als der Grenzwert, wird der Schweißprozess fortgeführt (Block 104). Ist der gemessene Wert kleiner oder gleich dem Grenzwert, wird der Schweißbrenner einer Reinigung unterzogen (Block 105) oder zumindest eine Warnung ausgegeben. Danach kann der Schweißprozess wieder fortgeführt werden.

Der Druck des Schutzgases kann also zum einen über den Differenzdruck und zum anderen über den Rückstaudruck erfasst werden.

## Patentansprüche

1. Verfahren zum Überwachen des Schutzgases (5) bei einem mit einem Schweißbrenner (7) durchgeführten Schweißprozess, wobei zumindest zwei von der Art des Schutzgases (5) abhängige Mess-größen (Pi) mit zumindest einem Sensor (Si) gemessen werden, **dadurch gekennzeichnet, dass** die Messwerte (Mi) der zumindest zwei Messgrößen (Pi) des Schutzgases (5) mit mehreren Schutzgasarten (Gi) zugeordneten gespeicherten Werten (Mi') der zumindest zwei Messgrößen (Pi) verglichen werden, und jene Schutzgasart (Gi) angezeigt wird, dessen zugeordnete Werte (Mi') der zumindest zwei Messgrößen (Pi) den Messwerten (Mi) der zumindest zwei Messgrößen (Pi) des Schutzgases (5) am nächsten liegen.

2. Verfahren nach Anspruch 1, **dadurch gekennzeichnet, dass** die Heizleistung und der Differenzdruck des Schutzgases (5) als Messgrößen (Pi) des Schutzgases (5) gemessen werden und die Messwerte (Mi) der Heizleistung und des Differenzdrucks mit mehreren Schutzgasarten (Gi) zugeordneten gespeicherten Werten (Mi') der Heizleistung und des Differenzdrucks verglichen werden, und jene Schutzgasart (Gi) angezeigt wird, dessen zugeordnete Werte (Mi') der Heizleistung und des Differenzdrucks den Messwerten (Mi) der Heizleistung und des Differenzdrucks am nächsten liegen.

3. Verfahren nach Anspruch 2, **dadurch gekennzeichnet, dass** die Heizleistung des Schutzgases (5) mit einem kalorimetrischen Massenstrommessverfahren gemessen wird.

4. Verfahren nach einem der Ansprüche 1 bis 3, **dadurch gekennzeichnet, dass** zwei Schutzgasarten (Gi) angezeigt werden, wenn die diesen Schutzgasarten (Gi) zugeordneten gespeicherten Werte (Mi') der zumindest zwei Messgrößen (Pi) von den Messwerten (Mi) der zumindest zwei Messgrößen (Pi) des Schutzgases (5) gleich weit entfernt sind.

5. Verfahren nach einem der Ansprüche 1 bis 4, **dadurch gekennzeichnet, dass** als weitere Messgröße (Pi) des Schutzgases (5) die Temperatur (T) des Schutzgases (5) gemessen wird.

6. Verfahren nach einem der Ansprüche 1 bis 5, **dadurch gekennzeichnet, dass** eine Warnung ausgegeben wird, wenn die Differenzen der Messwerte (Mi) der zumindest zwei Messgrößen (Pi) des Schutzgases (5) von den mehreren Schutzgasarten (Gi) zugeordneten gespeicherten Werten (Mi') der zumindest zwei Messgrößen (Pi) vorgegebene Grenzwerte überschreiten.

7. Verfahren nach einem der Ansprüche 1 bis 6, **dadurch gekennzeichnet, dass** der Durchfluss und/oder der Rückstaudruck des Schutzgases (5) gemessen wird, und bei Unterschreitung eines vorgegebenen Grenzwerts des Durchflusses und/oder des Rückstaudrucks des Schutzgases (5) eine Warnung einer Verschmutzung des Schweißbrenners (7) ausgegeben wird.

8. Verfahren nach Anspruch 7, **dadurch gekennzeichnet, dass** der Schweißbrenner (7) automatisch gereinigt wird, wenn der vorgegebene Grenzwert unterschritten wird.

9. Vorrichtung (30) zum Überwachen des Schutzgases (5) bei einem mit einem Schweißbrenner (7) durchgeführten Schweißprozess, wobei zur Messung zumindest zweier Messgrößen (Pi) des Schutzgases (5) jeweils ein Sensor (Si) zur Messung jeweils einer Messgröße (Pi) oder ein Sensor (Si) zur Messung mehrerer Messgrößen (Pi), weiters ein Speicher (31) zum Speichern mehrerer Schutzgasarten (Gi) und diesen Schutzgasarten (Gi) zugeordneten Werten (Mi') zumindest zweier Messgrößen (Pi), eine Einrichtung (33) zum Vergleichen der Messwerte (Mi) der zumindest zwei Messgrößen (Pi) des Schutzgases (5) mit den mehreren Schutzgasarten (Gi) zugeordneten gespeicherten Werten (Mi') der zumindest zwei Messgrößen (Pi), und eine Anzeige (34) zur Anzeige jener Schutzgasart (Gi), dessen zugeordnete Werte (Mi') der zumindest zwei Messgrößen (Pi) den Messwerten (Mi) der zumindest zwei Messgrößen (Pi) des Schutzgases (5) am nächsten liegen, vorgesehen ist.

10. Vorrichtung (30) nach Anspruch 9, **dadurch gekennzeichnet, dass** ein Sensor (Si) zur Messung der Heizleistung des Schutzgases (5) und ein Sensor (Si) zur Messung des Differenzdrucks des Schutzgases (5), weiters ein Speicher (31) zum Speichern mehrerer Schutzgasarten (Gi) und diesen Schutzgasarten (Gi) zugeordneten Werten (Mi') der Heizleistung und des Differenzdrucks, eine Einrichtung (33) zum Vergleichen der Messwerte (Mi) der Heizleistung und des Differenzdrucks mit den zugeordneten gespeicherten Werten (Mi') der Heizleistung und des Differenzdrucks, und eine Anzeige zur Anzeige (34) jener Schutzgasart (Gi), dessen zugeordnete Werte (Mi') der Heizleistung und des Differenzdrucks den Messwerten (Mi) der Heizleistung und des Differenzdrucks am nächsten liegen, vorgesehen ist.

11. Vorrichtung (30) nach Anspruch 10, **dadurch gekennzeichnet, dass** der Sensor (Si) zur Messung der Heizleistung des Schutzgases (5) durch einen kalorimetrischen Massendurchflusssensor, vorzugsweise in Dünnschichttechnik, gebildet ist.

12. Vorrichtung (30) nach Anspruch 10 oder 11, **dadurch gekennzeichnet, dass** der Sensor (Si) zur Messung des Differenzdrucks des Schutzgases (5) durch zumindest einen Differenzdrucksensor gebildet ist.

13. Vorrichtung (30) nach einem der Ansprüche 9 bis 12, **dadurch gekennzeichnet, dass** die Anzeige (34) zur Anzeige zweier Schutzgasarten (Gi) ausgebildet ist, dessen zugeordneten gespeicherten Werte (Mi') der zumindest zwei Messgrößen (Pi) des Schutzgases (5) gleich weit von den Messwerten (Mi) der zumindest zwei Messgrößen (Pi) des Schutzgases (5) beabstandet sind.

14. Vorrichtung (30) nach einem der Ansprüche 9 bis 13, **dadurch gekennzeichnet, dass** eine Warnvorrichtung zur Ausgabe einer optischen und/oder akustischen Warnung vorgesehen ist, wenn die Differenzen zwischen den Messwerten (Mi) der zumindest zwei Messgrößen (Pi) des Schutzgases (5) und den zugeordneten gespeicherten Werten (Mi') der zumindest zwei Messgrößen (Pi) des Schutzgases (5) vorgegebene Grenzwerte überschreiten.

15. Vorrichtung (30) nach einem der Ansprüche 9 bis 14, **dadurch gekennzeichnet, dass** jeder Sensor (Si) zur Messung der zumindest zwei Messgrößen (Pi) des Schutzgases (5) in einer mit dem Schweißbrenner (7) verbundenen Stromquelle (2) angeordnet ist.

## Claims

1. A method for monitoring the protective gas (5) during a welding process performed using a welding torch (7), wherein at least two measurement variables (Pi), which are dependent on the type of protective gas (5), are measured by means of at least one sensor (Si), **characterized in that** the measured values (Mi) of the at least two measurement variables (Pi) of the protective gas (5) are compared with stored values (Mi'), which are associated with several protective gas types (Gi), of the at least two measurement variables (Pi), and the protective gas type (Gi), for which the assigned values (Mi') of the at least two measurement variables (Pi) are closest to the measured values (Mi) of the at least two measurement variables (Pi) of the protective gas (5), is displayed.

2. The method according to claim 1, **characterized in that** the heating capacity and the differential pressure of the protective gas (5) are measured as measurement variables (Pi) of the protective gas (5) and the measured values (Mi) of the heating capacity and of the differential pressure are compared with stored values (Mi'), which are associated with several protective gas types (Gi), of the heating capacity and of the differential pressure, and the protective gas type (Gi), for which the assigned values (Mi') of the heating capacity and of the differential pressure are closest to the measured values (Mi) of the heating capacity and of the differential pressure, is displayed.

3. The method according to claim 2, **characterized in that** the heating capacity of the protective gas (5) is measured by the calorimetric mass flow rate measuring method.

4. The method according to any one of claims 1 to 3, **characterized in that** two protective gas types (Gi) are displayed, if the stored values (Mi'), which are associated with these protective gas types (Gi), of the at least two measurement variables (Pi) are equally far away from the measured values (Mi) of the at least two measurement variables (Pi) of the protective gas (5).

5. The method according to any one of claims 1 to 4, **characterized in that** the temperature (T) of the protective gas (5) is measured as a further measurement variable (Pi) of the protective gas (5).

6. The method according to any one of claims 1 to 5, **characterized in that** a warning is emitted, if the differences of the measured values (Mi) of the at least two measurement variables (Pi) of the protective gas (5) with respect to the stored values (Mi'), which are associated with several protective gas types (Gi), of the at least two measurement variables (Pi), exceed predetermined threshold values.

7. The method according to any one of claims 1 to 6, **characterized in that** the flow rate and/or the return pressure of the protective gas (5) is measured and a warning concerning contamination of the welding torch (7) is emitted, if a predetermined threshold value of the flow rate and/or of the return pressure of the protective gas (5) is not reached.

8. The method according to claim 7, **characterized in that** the welding torch (7) is cleaned automatically, if the predetermined threshold value is not reached.

9. A device (30) for monitoring the protective gas (5) during a welding process performed using a welding torch (7), wherein for measuring at least two measurement variables (Pi) of the protective gas (5) one respective sensor (Si) for measuring at least one respective measurement variable (Pi) or one sensor for measuring several measurement variables (Pi) is provided, furthermore a memory (31) for storing several protective gas types (Gi) and values (Mi'), which are associated with these protective gas types (Gi), of two measurement variables (Pi), a means (33) for comparing the measured values (Mi) of the at least two measurement variables (Pi) of the protective gas (5) with the stored values (Mi'), which are associated with the several protective gas types (Gi), of the at least two measurement variables (Pi), and a display (34) for displaying the protective gas type (Gi) whose assigned values (Mi') of the at least two measurement variables (Pi) are closest to the measured values (Mi) of the at least two measurement variables (Pi) of the protective gas (5).

10. The device (30) according to claim 9, **characterized in that** a sensor (Si) for measuring the heating capacity of the protective gas (5) and a sensor (Si) for measuring the differential pressure of the protective gas (5), further a memory (31) for storing several protective gas types (Gi) and values (Mi') of the heating capacity and the differential pressure, which are assigned to these protective gas types (Gi), a means (33) for comparing the measured values (Mi) of the heating capacity and the differential pressure with the associated stored values (Mi') of the heating capacity and the differential pressure, and a display for displaying (34) the protective gas type (Gi), for which the assigned values (Mi') of the heating capacity and the differential pressure are closest to the measured values (Mi) of the heating capacity and the differential pressure, are provided.

11. The device (30) according to claim 10, **characterized in that** the sensor (Si) for measuring the heating capacity of the protective gas (5) is formed by a calorimetric mass flow sensor, preferably in thin-film technology.

12. The device (30) according to claim 10 or 11, **characterized in that** the sensor (Si) for measuring the differential pressure of the protective gas (5) is formed by at least a differential pressure sensor.

13. The device (30) according to any one of claims 9 to 12, **characterized in that** the display (34) for displaying two protective gas types (Gi), for which the assigned stored values(Mi') of the at least two measured variables (Pi) of the protective gas (5) are equally far away from the measured values (Mi) of the at least two measurement variables (Pi) of the protective gas (5), is formed.

14. The device (30) according to any one of claims 9 to 13, **characterized in that** a warning device for emitting an optical or acoustic warning is provided, if the difference between the measured values (Mi) of the at least two measurement variables (Pi) of the protective gas (5) and the associated stored values (Mi') of at least two measurement variables (Pi) of the protective gas (5) exceed predetermined threshold values.

15. The device (30) according to any one of claims 9 to 14, **characterized in that** each sensor (Si) for measuring the at least two measurement variables (Pi) of the protective gas (5) is arranged in a current source (2) connected to the welding torch (7).

## Revendications

1. Procédé de contrôle du gaz protecteur (5) au cours d'un procédé de soudage exécuté avec un chalumeau de soudage (7), au moins deux grandeurs de mesure (Pi) qui sont fonction de la nature du gaz protecteur (5) étant mesurées avec au moins un capteur (Si), **caractérisé en ce que** les valeurs de mesure (Mi) des au moins deux grandeurs de mesure (Pi) du gaz protecteur (5) sont comparées avec des valeurs (Mi') enregistrées, affectées à plusieurs types de gaz protecteur (Gi), des au moins deux grandeurs de mesure (Pi), et c'est le type de gaz protecteur (Gi) dont les valeurs (Mi') affectées des au moins deux grandeurs de mesure (Pi) sont les plus proches des valeurs de mesure (Mi) des au moins deux grandeurs de mesure (Pi) du gaz protecteur (5) qui est affiché.

2. Procédé selon la revendication 1, **caractérisé en ce que** la puissance de chauffe et la pression différentielle du gaz protecteur (5) sont mesurées en tant que grandeurs de mesure (Pi) du gaz protecteur (5), et **en ce que** les valeurs de mesure (Mi) de la puissance de chauffe et de la pression différentielle sont comparées avec des valeurs (Mi') enregistrées, affectées à plusieurs types de gaz protecteur (Gi), de la puissance de chauffe et de la pression différentielle, et **en ce que** c'est le type de gaz protecteur (Gi) dont les valeurs (Mi') affectées de la puissance de chauffe et de la pression différentielle sont les plus proches des valeurs de mesure (Mi) de la puissance de chauffe et de la pression différentielle qui est affiché.

3. Procédé selon la revendication 2, **caractérisé en ce que** la puissance de chauffe du gaz protecteur (5) est mesurée avec un procédé calorimétrique de mesure de débit massique.

4. Procédé selon l'une des revendications 1 à 3, **caractérisé en ce que** deux types de gaz protecteur (Gi) sont affichés quand les valeurs (Mi') enregistrées, affectées à ces types de gaz protecteur (Gi), des au moins deux grandeurs de mesure (Pi) sont éloignées de façon égale des valeurs de mesure (Mi) des au moins deux grandeurs de mesure (Pi) du gaz protecteur (5).

5. Procédé selon l'une des revendications 1 à 4, **caractérisé en ce que** la température (T) du gaz protecteur (5) est mesurée en tant que grandeur de mesure (Pi) supplémentaire du gaz protecteur (5).

6. Procédé selon l'une des revendications 1 à 5, **caractérisé en ce qu'**un avertissement est délivré quand les différences des valeurs de mesure (Mi) des au moins deux grandeurs de mesure (Pi) du gaz protecteur (5) dépassent des valeurs limites prédéfinies par les valeurs (Mi') enregistrées, affectées aux plusieurs types de gaz protecteur (Gi), des au moins deux grandeurs de mesure (Pi).

7. Procédé selon l'une des revendications 1 à 6, **caractérisé en ce que** le débit et/ou la pression de retenue du gaz protecteur (5) est mesuré(e) et, en cas de passage sous une valeur limite prédéfinie du débit et/ou de la pression de retenue du gaz protecteur (5), un avertissement d'encrassement du chalumeau de soudage (7) est délivré.

8. Procédé selon la revendication 7, **caractérisé en ce que** le chalumeau de soudage (7) est nettoyé automatiquement en cas de passage sous la valeur limite prédéfinie.

9. Dispositif (30) de contrôle du gaz protecteur (5) au cours d'un procédé de soudage exécuté avec un chalumeau de soudage (7), dans lequel, pour la mesure d'au moins deux grandeurs de mesure (Pi) du gaz protecteur (5), il est prévu respectivement un capteur (Si) pour la mesure respectivement d'une grandeur de mesure (Pi) ou un capteur (Si) pour la mesure de plusieurs grandeurs de mesure (Pi), également une mémoire (31) pour l'enregistrement de plusieurs types de gaz protecteur (Gi) et de valeurs (Mi'), affectées à ces types de gaz protecteur (Gi), d'au moins deux grandeurs de mesure (Pi), un dispositif (33) pour la comparaison des valeurs de mesure (Mi) des au moins deux grandeurs de mesure (Pi) du gaz protecteur (5) avec les valeurs (Mi') enregistrées, affectées aux plusieurs types de gaz protecteur (Gi), des au moins deux grandeurs de mesure (Pi), et un afficheur (34) pour l'affichage du type de gaz protecteur (Gi) dont les valeurs (Mi') affectées des au moins deux grandeurs de mesure (Pi) sont les plus proches des valeurs de mesure (Mi) des au moins deux grandeurs de mesure (Pi) du gaz protecteur (5).

10. Dispositif (30) selon la revendication 9, **caractérisé en ce qu'**il est prévu un capteur (Si) pour la mesure de la puissance de chauffe du gaz protecteur (5) et un capteur (Si) pour la mesure de la pression différentielle du gaz protecteur (5), également une mémoire (31) pour enregistrer plusieurs types de gaz protecteur (Gi) et de valeurs (Mi'), affectées à ces types de gaz protecteur (Gi), de la puissance de chauffe et de la pression différentielle, un dispositif (33) pour la comparaison des valeurs de mesure (Mi) de la puissance de chauffe et de la pression différentielle avec les valeurs (Mi') enregistrées affectées de la puissance de chauffe et de la pression différentielle, et un afficheur pour l'affichage (34) du type de gaz protecteur (Gi) dont les valeurs (Mi') affectées de la puissance de chauffe et de la pression différentielle sont les plus proches des valeurs de mesure (Mi) de la puissance de chauffe et de de la pression différentielle.

11. Dispositif (30) selon la revendication 10, **caractérisé en ce que** le capteur (Si) pour la mesure de la puissance de chauffe du gaz protecteur (5) est formé d'un capteur calorimétrique de débit massique, de préférence selon la technique des couches minces.

12. Dispositif (30) selon la revendication 10 ou 11, **caractérisé en ce que** le capteur (Si) pour la mesure de la pression différentielle du gaz protecteur (5) est formé d'au moins un capteur de pression différentielle.

13. Dispositif (30) selon l'une des revendications 9 à 12, **caractérisé en ce que** l'afficheur (34) est constitué pour l'affichage de deux types de gaz protecteur (Gi) dont les valeurs (Mi') enregistrées affectées des au moins deux grandeurs de mesure (Pi) du gaz protecteur (5) sont éloignées de façon égale des valeurs de mesure (Mi) des au moins deux grandeurs de mesure (Pi) du gaz protecteur (5).

14. Dispositif (30) selon l'une des revendications 9 à 13, **caractérisé en ce qu'**il est prévu un dispositif d'avertissement pour la délivrance d'un avertissement optique et/ou acoustique quand les différences entre les valeurs de mesure (Mi) des au moins deux grandeurs de mesure (Pi) du gaz protecteur (5) et les valeurs (Mi') enregistrées affectées des au moins deux grandeurs de mesure (Pi) du gaz protecteur (5) sont supérieures à des valeurs limites prédéfinies.

15. Dispositif (30) selon l'une des revendications 9 à 14, **caractérisé en ce que** chaque capteur (Si) destiné à la mesure des au moins deux grandeurs de mesure (Pi) du gaz protecteur (5) est disposé dans une source de courant (2) raccordée au chalumeau de soudage (7).
